# EUROPÄISCHE PATENTSCHRIFT

(11) **EP 3 110 666 B1**
(45) Veröffentlichungstag und Bekanntmachung des Hinweises auf die Patenterteilung: **10.04.2019**
(21) Anmeldenummer: 15703225.1
(22) Anmeldetag: 07.02.2015
(51) Int. Cl.: B60R 19/52, B62D 27/02, B60R 19/24

(54) **BEFESTIGUNGSANORDNUNG EINER KÜHLERVERKLEIDUNG UND EINES STOSSFÄNGERS AN EINEM FRONTENDTRÄGER EINES KRAFTWAGENS**
FIXING DEVICE FOR A RADIATOR GRILL AND A BUMPER ON A FRONT END MOUNT OF A VEHICLE
DISPOSITIF DE FIXATION D'UNE CALANDRE ET D'UN PARE-CHOC DANS UN SUPPORT D'EXTRÉMITÉ AVANT D'UN VEHICULE.

(30) Priorität: 28.02.2014 DE 102014002994
(43) Veröffentlichungstag der Anmeldung: 04.01.2017
(73) Patentinhaber: Daimler AG, 70327 Stuttgart (DE)
(72) Erfinder: GÜNTHER, Alexander, 73547 Lorch (DE); JAKOBS, Holger, 72135 Detttenhausen (DE)
(74) Vertreter: JENSEN & SON
(86) Internationale Anmeldenummer: PCT/EP2015/000259
(87) Internationale Veröffentlichungsnummer: WO 2015/128059

(56) Entgegenhaltungen:
- DE-A1- 10 307 974
- DE-A1-102006 026 255
- DE-U1-202005 019 756
- US-A1- 2007 182 174
- US-A1- 2007 222 237
- US-A1- 2011 204 680

## Beschreibung

Die Erfindung betrifft eine Befestigungsanordnung einer Kühlerverkleidung und eines Stoßfängers an einem Frontendträger eines Kraftwagens gemäß Oberbegriff des Anspruchs 1. Weiterhin betrifft die Erfindung eine Kühlerverkleidung für einen Kraftwagen gemäß Oberbegriff des Anspruchs 6. Schließlich betrifft die Erfindung einen Stoßfänger für einen Kraftwagen gemäß dem Oberbegriff von Patentanspruch 7.

Die US 2007/182174 A1 beschreibt die Befestigungsanordnung einer Kühlerverkleidung und eines Stossfängers an einem Frontendträger eines Kraftwagens gemäß dem Oberbegriff des unabhängigen Anspruchs 1. Hierbei ist gemäß einer Ausführungsform eine zentrale Strebe durch Punktschweißen mit einem C-förmigen Abstützteil verbunden, an welchem mittels einer Abstützung ein Frontgrill unterseitig abgestützt ist. Gemäß einer weiteren Ausführungsform ist ein Stützteil für einen Stoßfängerträger über ein zusätzliches Stützteil an der zentralen Strebe fixiert.

Hierbei ist das zusätzliche Stützteil mit der zentralen Strebe über einen Bolzen verbunden. In einem Verbindungsbereich ist das zusätzliche Stützteil mit dem Stützteil verbunden.

Aus dem Serienfahrzeugbau von Personenkraftwagen ist es allgemein bekannt, eine jeweilige Kühlerverkleidung, welche bisweilen auch unter dem Begriff Kühlergitter bekannt ist, und einen jeweiligen Stoßfänger mittels mehrerer Befestigungsteile an einem korrespondierenden Frontendträger eines Frontmoduls zu befestigen. Bislang werden hierzu die jeweiligen Befestigungsteile der Kühlerverkleidung und des Stoßfängers über jeweils separate Befestigungselemente, insbesondere in Form von Schraubelementen, am Frontendträger fixiert.

Insbesondere bei der Fixierung des Stoßfängers ist es dabei bislang erforderlich, dass dessen jeweilige Befestigungsteile außerdem mit sogenannten Lochverstärkern ausgestattet werden, durch welche das jeweilige Schraubelement hindurchgeführt und mit dem Frontendträger verschraubt ist. Dies ist insbesondere dem Umstand geschuldet, dass der Stoßfänger, genauer gesagt, dessen Stoßfängerträger, üblicherweise aus einem relativ weichen Material hergestellt ist und andernfalls die jeweilige Verbindung zwischen Stoßfängerträger und Frontendträger entsprechenden Setzvorgängen unterworfen wäre. Insgesamt ist die bisherige Befestigungsanordnung der Kühlerverkleidung und des Stoßfängers am korrespondierenden Frontendträger relativ kosten- und zeitintensiv in der Montage.

Aufgabe der vorliegenden Erfindung ist es daher, eine Kühlerverkleidung, einen Stoßfänger sowie eine Befestigungsanordnung der eingangs genannten Art zu schaffen, mittels welchen sich eine kosten- und zeitsparende Befestigung der Kühlerverkleidung sowie des Stoßfängers am korrespondierenden Frontendträger realisieren lässt.

Diese Aufgabe wird erfindungsgemäß durch eine Befestigungsanordnung mit den Merkmalen des Anspruchs 1, durch eine Kühlerverkleidung mit den Merkmalen des Anspruchs 6 und einen Stoßfänger mit den Merkmalen des Anspruchs 7 gelöst. Vorteilhafte Ausgestaltungen mit zweckmäßigen Weiterbildungen der Erfindung sind in den jeweils abhängigen Ansprüchen angegeben.

Um eine Befestigungsanordnung einer Kühlerverkleidung und eines Stoßfängers an einem Frontendträger eines Kraftwagens zu schaffen, welche besonders zeit- und kostengünstig herstellbar ist, ist gemäß Anspruch 1 erfindungsgemäß vorgesehen, dass auf Seiten der Kühlerverkleidung ein Verbindungselement im Bereich des Befestigungsteils und auf Seiten des Stoßfängers eine Aufnahme am korrespondierenden Befestigungsteil vorgesehen sind, welche eine gemeinsame Befestigungseinrichtung bilden, über welche die Kühlerverkleidung und der Stoßfänger mittels eines Schraubelements, am Frontendträger
befestigt sind. Die gemeinsame Befestigungseinrichtung besteht aus dem Verbindungselement der Kühlerverkleidung und der Aufnahme des Stoßfängers. Neben dem Vorteil der gegenseitigen Relativpositionierung zwischen Kühlerverkleidung und Stoßfänger durch Einstecken des Verbindungselements in die Aufnahme ergibt sich somit der weitere Vorteil, dass beide Bauteile über ein und dasselbe Schraubelement, am Frontendträger befestigbar sind. Insgesamt ist somit erkennbar, dass sich aufgrund der zwangsläufigen und praktisch toleranzfreien Relativpositionierung der Kühlerverkleidung relativ zum Stoßfänger einerseits und durch die gemeinsame Festlegung der beiden Bauteile am Frontendträger andererseits eine besonders einfache und kostengünstige Montage realisieren lässt. Überdies können durch das Vorsehen des Verbindungselements auf Seiten der Kühlerverkleidung die bislang erforderlichen Lochverstärker zur Verstärkung der korrespondierenden Aufnahme auf Seiten des Stoßfängers eingespart werden, was zu einem weiteren Kostenvorteil führt.

Da häufig die Kühlerverkleidung aus einem steiferen und festeren Material besteht als der Stoßfänger, insbesondere der Stoßfängerträger, wird durch das Verbindungselement der Kühlerverkleidung in vorteilhafter Weise eine Aussteifung der korrespondierenden Aufnahme des Stoßfängers erreicht, so dass auf bislang übliche, sogenannte Lochverstärker im Bereich der Aufnahme des Stoßfängerträgers verzichtet werden kann. Vielmehr übernimmt das Verbindungselement der Kühlerverkleidung diese verstärkende Funktion der Aufnahme, welche beispielsweise als Durchgangsöffnung innerhalb des Stoßfängerträgers ausgebildet ist. Ein weiterer Vorteil des Verbindungselements besteht darin, dass hierdurch die gemeinsame Befestigungseinrichtung mit dem Verbindungselement der Kühlerverkleidung und der Aufnahme des Stoßfängerträgers als formschlüssige Verbindung ausgebildet werden kann, so dass diese eine zwangsläufige, das heißt selbstständige beziehungsweise selbsttätige Relativpositionierung zwischen Kühlerverkleidung und Stoßfänger durch Einstecken des Verbindungselements in die Aufnahme schafft, welche weitestgehend toleranzunabhängig ist. Mit anderen Worten brauchen somit die Kühlerverkleidung und der Stoßfänger nicht jeweils separat relativ zum Frontendträger eingestellt werden, sondern die gemeinsame Befestigungseinrichtung von Kühlerverkleidung und Stoßfänger ermöglichen eine positionsgetreue Relativpositionierung dieser beiden Bauteile, so dass im Weiteren lediglich eine Ausrichtung relativ zum Frontendträger erfolgen muss.

Bei einem besonders vorteilhaften Ausführungsbeispiel der Befestigungsanordnung ist das Verbindungselement an der Kühlerverkleidung angeformt, das heißt also einstückig mit dieser ausgebildet.

Bei einem weiteren vorteilhaften Ausführungsbeispiel der Kühlerverkleidung ist das Verbindungselement im Wesentlichen hülsenförmig zur Herstellung einer formschlüssigen Verbindung mit der Aufnahme des Befestigungsteils des Stoßfängers ausgebildet. Eine derartige hülsenförmige Gestalt des Verbindungselements hat insbesondere den Vorteil, dass sich hierdurch auf einfache Weise eine entsprechende, formschlüssige Steckverbindung mit der korrespondierenden Aufnahme des Befestigungsteils des Stoßfängers herstellen lässt und dass andererseits auf einfache Weise lediglich ein Befestigungselement, insbesondere ein Schraubelement, zur gemeinsamen Befestigung der Kühlerverkleidung und des Stoßfängers am Frontendträger durch das Verbindungselement hindurch gesteckt zu werden braucht.

Zur selbsttätigen Ausrichtung von Kühlerverkleidung und Stoßfänger im Zuge deren gemeinsamer Befestigung hat es sich als vorteilhaft erwiesen, das an der Kühlerverkleidung vorgesehene, domartig oder zapfenförmige sowie vorzugsweise hülsenförmige Verbindungselement mit einer in Größe und Form an die Aufnahme am Stoßfänger angepasster Außenkontur zu versehen. Bei entsprechend enger Toleranz zwischen Verbindungselement und Aufnahme ist eine sehr präzise, reproduzierbare Ausrichtung von Kühlerverkleidung und Stoßfänger aufgrund dieser Zapfen-Loch-Verbindung sichergestellt.

In diesem Zusammenhang hat es sich als weiterhin vorteilhaft gezeigt, wenn das hülsenförmige Verbindungselement eine Durchgangsöffnung für das Befestigungselement, insbesondere das Schraubelement, aufweist, durch welche eine Führung für das Befestigungselement zum Toleranzausgleich gebildet ist. Somit kann in vorteilhafter Weise bei gelöstem Schraubelement die Kühlerverkleidung und mithin auch der Stoßfänger in eine Raumrichtung, insbesondere in Fahrzeuglängsrichtung, relativ zum Frontendträger verschoben werden. Hierzu ist die Durchgangsöffnung im Verbindungselement als Langloch ausgebildet.

Um eine Kühlerverkleidung zu schaffen, mittels welcher sich insgesamt eine zeit- und kostensparende Herstellung einer Befestigungsanordnung der Kühlerverkleidung sowie eines Stoßfängers an einem Frontendträger eines Kraftwagens realisieren lässt, ist es gemäß Patentanspruch 6 vorgesehen, dass am Befestigungsteil der Kühlerverkleidung ein Verbindungselement vorgesehen ist, welches mit einer korrespondierenden Aufnahme eines Befestigungsteils des Stoßfängers zu einer gemeinsamen Befestigungseinrichtung der Kühlerverkleidung und des Stoßfängers an dem Frontendträger verbindbar ist. Die gemeinsame Befestigungseinrichtung besteht aus dem Verbindungselement der Kühlerverkleidung und der Aufnahme des Stoßfängers. Auf Seiten der Kühlerverkleidung ist also wenigstens ein Verbindungselement im Bereich des korrespondierenden Befestigungsteils vorzusehen, an welchem einerseits auch die korrespondierende Aufnahme des Stoßfänger-Befestigungsteils anordenbar ist und über welches andererseits die gemeinsame Festlegung der Kühlerverkleidung und des Stoßfängers am Frontendträger erfolgen kann.

Für die erfindungsgemäße Kühlerverkleidung gelten im Weiteren auch die oben im Zusammenhang mit der Befestigungsanordnung beschriebenen Vorteile. So ist es beispielsweise von Vorteil, wenn das Verbindungselement der Kühlerverkleidung an der Kühlerverkleidung angeformt ist, das heißt also einstückig mit dieser ausgebildet ist.

Weiterhin ist es vorteilhalft, wenn das Verbindungselement der Kühlerverkleidung im Wesentlichen hülsenförmig zur Herstellung einer formschlüssigen Verbindung mit der Aufnahme des Befestigungsteils des Stoßfängers ausgebildet ist. Eine derartige hülsenförmige Gestalt des Verbindungselements hat insbesondere den Vorteil, dass sich hierdurch auf einfache Weise eine entsprechende, formschlüssige Steckverbindung mit der korrespondierenden Aufnahme des Befestigungsteils des Stoßfängers herstellen lässt und dass andererseits auf einfache Weise lediglich ein Befestigungselement, insbesondere ein Schraubelement, zur gemeinsamen Befestigung der Kühlerverkleidung und des Stoßfängers am Frontendträger durch das Verbindungselement hindurch gesteckt zu werden braucht.

Zur selbsttätigen Ausrichtung von Kühlerverkleidung und Stoßfänger im Zuge deren gemeinsamer Befestigung hat es sich als vorteilhaft erwiesen, das an der Kühlerverkleidung vorgesehene, domartig oder zapfenförmige sowie vorzugsweise hülsenförmige Verbindungselement mit einer in Größe und Form an die Aufnahme am Stoßfänger angepasster Außenkontur zu versehen. Bei entsprechend enger Toleranz zwischen Verbindungselement und Aufnahme ist eine sehr präzise, reproduzierbare Ausrichtung von Kühlerverkleidung und Stoßfänger aufgrund dieser Zapfen-Loch-Verbindung sichergestellt.

In diesem Zusammenhang hat es sich als weiterhin vorteilhaft gezeigt, wenn das hülsenförmige Verbindungselement eine Durchgangsöffnung für das Befestigungselement, insbesondere das Schraubelement, aufweist, durch welche eine Führung für das Befestigungselement zum Toleranzausgleich gebildet ist. Somit kann in vorteilhafter Weise bei gelöstem Schraubelement die Kühlerverkleidung und mithin auch der Stoßfänger in eine Raumrichtung, insbesondere in Fahrzeuglängsrichtung, relativ zum Frontendträger verschoben werden. Hierzu ist die Durchgangsöffnung im Verbindungselement als Langloch ausgebildet.

Zur Lösung der Aufgabe wird weiterhin ein Stoßfänger mit den Merkmalen des Anspruchs 7 vorgeschlagen. Dieser weist wenigstens ein Befestigungsteil auf, mittels welchem dieser in zeit- und kostengünstiger Weise an einem korrespondierenden Frontendträger angebundenen werden kann. Hierzu ist am Befestigungsteil des Stoßfängers eine Aufnahme vorgesehen, welche mit einem korrespondierenden Verbindungselement eines Befestigungsteils einer Kühlerverkleidung zu einer gemeinsamen Befestigungseinrichtung der Kühlerverkleidung und des Stoßfängers an dem Frontendträger verbindbar ist. Die gemeinsame Befestigungseinrichtung besteht aus dem Verbindungselement der Kühlerverkleidung und der Aufnahme des Stoßfängers. Die vorstehend bereits im Zusammenhang mit der erfindungsgemäßen Befestigungsanordnung erläuterten Vorteile gelten dabei in ebensolcher Weise für die am Befestigungsteil des Stoßfängers vorgesehene Aufnahme. Dabei ist in weiterer Ausgestaltung der Erfindung vorgesehen, dass die Aufnahme besonders einfach als Durchgangsöffnung in dem beispielsweise stegartigen oder laschenartigen Befestigungselement des Stoßfängers ausgestaltet werden kann.

Weitere Vorteile, Merkmale und Einzelheiten der Erfindung ergeben sich aus der nachfolgenden Beschreibung eines bevorzugten Ausführungsbeispiels sowie anhand der Zeichnung. Dabei zeigen:

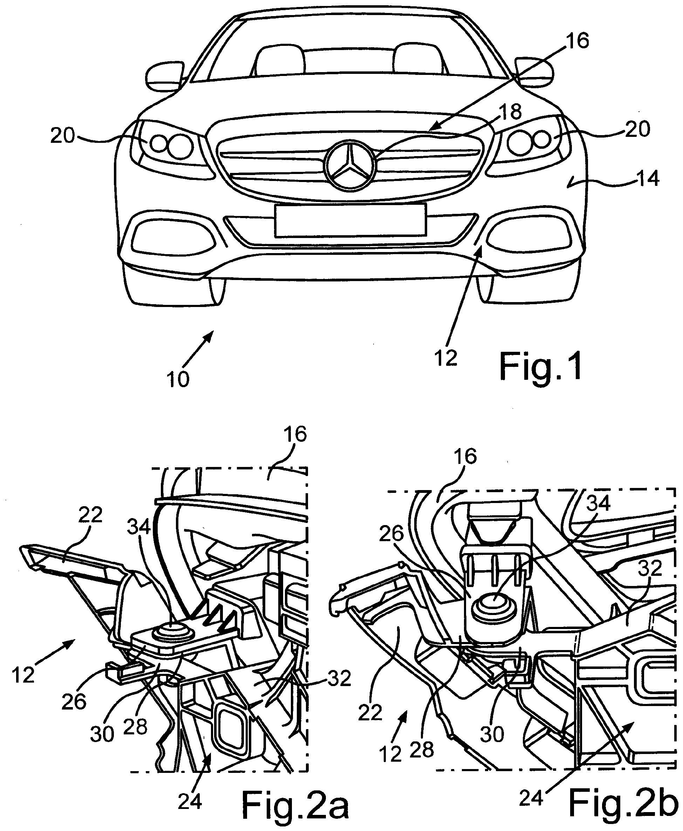

- Fig. 1: eine Vorderansicht auf einen Kraftwagenbug eines Personenkraftwagens mit einem Stoßfänger und einer zwischen jeweiligen Leuchteinheiten angeordneten Kühlerverkleidung, welche an einem nicht weiter erkennbaren Frontendträger eines Frontendmoduls des Kraftwagens befestigt sind;
- Fig. 2a, 2b: jeweilige ausschnittsweise und perspektivische Rückansichten von schräg oben auf eine Befestigungsanordnung der Kühlerverkleidung und eines Stoßfängerträgers des Stoßfängers am Frontendträger des Kraftwagens gemäß Fig. 1, wobei die Kühlerverkleidung und der Stoßfänger jeweils wenigstens ein Befestigungsteil aufweisen, mittels welchen die Kühlerverkleidung und der Stoßfänger am Frontendträger unter Vermittlung eines gemeinsamen Schraubelements befestigt sind;

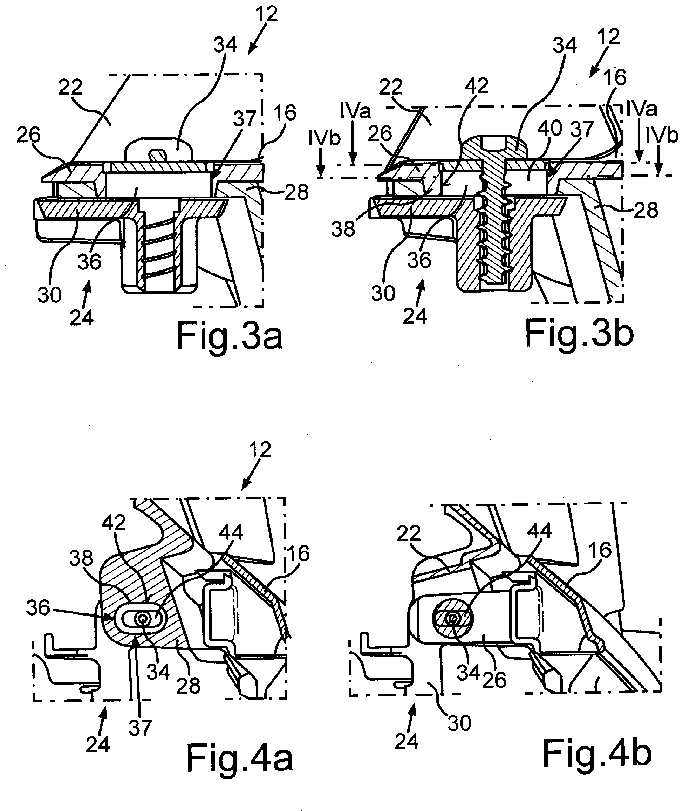

- Fig. 3a, 3b: jeweilige ausschnittsweise Schnittansichten der Befestigungsanordnung der Kühlerverkleidung und des Stoßfängers am Frontendträger gemäß den Fig. 2a und 2b entlang einer jeweiligen, in Fahrzeughochrichtung und in Fahrzeuglängsrichtung verlaufenden Schnittebene, wobei insbesondere erkennbar ist, dass am Befestigungsteil der Kühlerverkleidung ein Verbindungselement vorgesehen ist, welches mit einer korrespondierenden Aufnahme des Befestigungsteils des Stoßfängers zu einer gemeinsamen Befestigungseinrichtung verbunden ist, über welche die Kühlerverkleidung und der Stoßfänger mittels des gemeinsamen Schraubelements am Frontendträger befestigt sind; und in den
- Fig. 4a, 4b: eine jeweilige ausschnittsweise Schnittansicht der Befestigungsanordnung entlang einer jeweiligen, durch die Linie IVa-IVa bzw. IVb-IVb in Fig. 3b repräsentierten, im Wesentlichen horizontal verlaufenden Schnittebene, wobei aus Fig. 4a erkennbar ist, dass das Verbindungselement der Kühlerverkleidung und die Aufnahme des Stoßfängers eine im Wesentlichen formschlüssige Verbindung bilden, und wobei insbesondere in Zusammenschau mit Fig. 4b erkennbar ist, dass eine Durchgangsöffnung in dem hülsenförmigen Verbindungselement der Kühlerverkleidung eine Führung für das zugehörige Schraubelement bildet.

In Fig. 1 ist in einer Vorderansicht ein Kraftwagenbug 10 eines Personenkraftwagens dargestellt, der einen Stoßfänger 12 aufweist, von welchem im Wesentlichen nur eine Stoßfängerverkleidung 14 erkennbar ist. Des Weiteren ist eine Kühlerverkleidung 16 in Form eines ein Emblem 18 tragenden Kühlergrills vorgesehen, welcher sich im Wesentlichen zwischen jeweiligen Leuchteinheiten 20, sogenannten Frontscheinwerfern, erstreckt.

In den Fig. 2a und 2b ist in einer jeweiligen, ausschnittsweisen Perspektivansicht von schräg oben eine Befestigungsanordnung der in Fig. 1 erkennbaren Kühlerverkleidung 16 und eines Stoßfängerträgers 22 des in Fig. 1 erkennbaren Stoßfängers 12 an einem Frontendträger 24 des Kraftwagens abgebildet. Am Frontendträger 24 sind dabei in bekannter Weise die entsprechenden Bauteile des Frontmoduls, also der Stoßfänger mit dem die Stoßfängerverkleidung 14 tragenden Stoßfängerträger 22, die Kühlerverkleidung 16, die Leuchteinheiten 20 sowie beispielsweise auch Bauteile einer Kühlereinrichtung einer Verbrennungskraftmaschine des Kraftwagens befestigt.

Wie nun aus den Figuren 2a und 2b erkennbar ist, steht von der vorliegend aus Kunststoffmaterial hergestellten Kühlerverkleidung 16 ein laschenartiges beziehungsweise stegartiges Befestigungsteil 26 horizontal und sich in Fahrzeuglängsrichtung nach hinten erstreckend ab. Dabei ist das Befestigungsteil 26 auf einem seitlich zugeordneten Befestigungsteil 28 des Stoßfängerträgers 22 des Stoßfängers 12 abgestützt, welches vorliegend im Wesentlichen ebenfalls als Lasche oder dergleichen Leiste aus einem Kunststoffmaterial gestaltet ist und sich im Wesentlichen horizontal und in Fahrzeugquerrichtung erstreckt. Dieses Befestigungsteil 28 stützt sich wiederum auf einem Arm 30 ab, welcher von einem mittleren Teil 32 des Frontendträgers 24, welches seinerseits nach hinten hin rohbauseitig befestigt ist, zur linken Fahrzeugseite hin absteht. Sowohl das Befestigungsteil 26 als auch das Befestigungsteil 28 sind vorliegend mittels eines gemeinsamen Befestigungselements in Form eines Schraubelements 34 auf im Weiteren noch näher beschriebene Weise am Arm 30 des Frontendträgers 24 befestigt.

Die Befestigungsanordnung dieser drei Bauteile wird insbesondere aus den Figuren 3a und 3b erkennbar, die diese in jeweiligen ausschnittsweisen Schnittansichten entlang einer in Fahrzeughochrichtung beziehungsweise in Fahrzeuglängsrichtung verlaufenden Schnittebene zeigen. Figur 3a zeigt dabei den Arm 30 des Frontendträgers 24 und das Befestigungsteil 28 des Stoßfängerträgers 22 in Schnittansicht entlang der Mittellängsachse des Schraubelements 34. In Figur 3b ist überdies auch das Befestigungsteil 26 der Kühlerverkleidung 16 geschnitten dargestellt.

Insbesondere aus Figur 3b wird dabei erkennbar, dass -in im Kraftwagen eingebauten Zustand der Bauteile gesehen- unterseitig vom Befestigungsteil 26 der Kühlerverkleidung 16 ein Verbindungselement 36 nach unten hin absteht, welches im Wesentlichen hülsenförmig ausgebildet ist mit einer Außenwand 38, welche eine Durchgangsöffnung 40 für das Schraubelement 34 begrenzt. Dieses Verbindungselement 36 ragt in eine als Durchgangsöffnung ausgebildete Aufnahme 42 des laschenartigen Befestigungsteils 28 des Stoßfängerträgers 22 hinein. Dies ist insbesondere aus Figur 4a ersichtlich, welche eine ausschnittsweise Schnittansicht der Befestigungsanordnung entlang einer durch die Linie IVa-IVa in Figur 3b gekennzeichneten, horizontal verlaufenden Schnittebene zeigt.

Dabei wird insbesondere erkennbar, dass das hülsenförmige Verbindungselement 36 nicht nur in die Aufnahme 42 hineinragt, sondern eine Verbindungseinrichtung 37 mit einer formschlüssigen Verbindung bildet. Hierzu ist die Aufnahme 42 in ihrem langlochartigen Querschnitt an den entsprechenden Querschnitt des hülsenförmigen Verbindungselements 36 angepasst. Mithin wird also durch die entsprechende Ausgestaltung des Verbindungselements 36 und der Aufnahme 42 eine Verbindungseinrichtung 37 geschaffen, die eine exakte Positionierung der Kühlerverkleidung 16 relativ zum Stoßfängerträger 22 beziehungsweise zum Stoßfänger 12 insgesamt auf der jeweiligen Fahrzeugseite erreicht. Dabei ist also das hülsenförmige Verbindungselement 36 in Größe und Form so an die Aufnahme 42 entsprechend angepasst, dass die so gebildete Zapfen-Loch-Verbindung nur eine sehr kleine Toleranz aufweist.

Durch die nicht-rotationssymmetrische Ausgestaltung des Verbindungselements 36 und der Aufnahme 42 ist entsprechend das Verbindungselement 36 nur in Steckbeziehungsweise Auszugsrichtung, also im Wesentlichen in Fahrzeughochrichtung (z-Richtung), relativ zur Aufnahme 42 bewegbar.

Durch das Einstecken beziehungsweise Verbinden des Verbindungselements 36 der Kühlerverkleidung 16 mit der Aufnahme 42 des Stoßfängerträgers 22 wird nicht nur die beschriebene Relativpositionierung dieser Bauteile zueinander erreicht, sondern überdies wird insbesondere das Befestigungsteil 42 des Stoßfängerträgers 22 durch das Verbindungselement 36 verstärkt. Üblicherweise ist nämlich die Kühlerverkleidung 16 aus einem entsprechend stabileren Werkstoff gestaltet als der Stoßfängerträger 22. Bei der Befestigung des Stoßfängerträgers 22 wurden deshalb bislang im Bereich der entsprechenden Aufnahme 42 entsprechende Lochverstärker in Form von metallischen Einsatzteilen eingesetzt, die beispielsweise Setzvorgänge vermeiden. Auf diese Lochverstärker kann nunmehr durch das jeweilige hülsenartige Verbindungselement 36, welches auch als sogenannter Durchzug bezeichnet wird, verzichtet werden.

Aus den Figuren 3a und 3b ist überdies erkennbar, dass das hülsenartige Verbindungselement 36 in seiner axialen Dicke auf die Dicke des laschenartigen Befestigungsteils 28 des Stoßfängerträgers 22 abgestimmt ist. Wird demzufolge das Schraubelement 34 angezogen, wird somit eine gemeinsame Fixierung des Stoßfängerträgers 22 und der Kühlerverkleidung 16 am Frontendträger 24 erreicht.

In Zusammenschau von Figur 4a mit Figur 4b, welche eine weitere, ausschnittsweise Schnittansicht durch die Befestigungsanordnung analog zu Figur 4a entlang einer durch die Linie IVb-IVb in Figur 3 repräsentierten, im Wesentlichen horizontal verlaufenden Schnittebene zeigt, wird insbesondere erkennbar, dass die Durchgangsöffnung 40 des hülsenartigen Verbindungselements 36 in ihrer Breite auf den Durchmesser des Schraubelements 34 abgestimmt ist. Die Führung 44 erstreckt sich dabei -wie dies aus den Figuren 4a und 4b erkennbar ist- im Wesentlichen in Fahrzeuglängsrichtung und horizontal. Auf diese Art und Weise ist es möglich, die Kühlerverkleidung 16 gemeinsam mit dem Stoßfänger 12 beziehungsweise dem Stoßfängerträger 22 in Fahrzeuglängsrichtung relativ zum Frontendträger 24 einzustellen. Nach dem Einstellen kann dann die vollständige Befestigungsanordnung dadurch hergestellt werden, dass mittels ein und desselben Schraubelements 34 beide Bauteile -der Stoßfänger 12 und die Kühlerverkleidung 16- relativ zum Frontendträger 24 festgelegt werden.

Wie insbesondere aus den Figuren 2a und 2b erkennbar ist, ist die gemeinsame Befestigungseinrichtung 37 bestehend aus dem Verbindungselement 36 und der Aufnahme 42 der jeweiligen Befestigungsteile 26 beziehungsweise 28 vorliegend im Nahbereich der korrespondierenden Leuchteinheit 20 angeordnet, so dass das jeweils zugeordnete Schraubelement 34 in einfacher Weise zugänglich ist. Eine ebensolche Befestigungsanordnung ist vorliegend auf der gegenüberliegenden Fahrzeugseite im entsprechenden Übergangsbereich zwischen der Kühlerverkleidung 16 und dem Stoßfängerträger 22 vorgesehen.

Insgesamt ist somit erkennbar, dass bei der vorliegenden Befestigungsanordnung einerseits eine Relativpositionierung der Kühlerverkleidung 16 relativ zum Stoßfänger 12 erreicht wird und andererseits die entsprechende Aufnahme 42 auf Seiten des Stoßfängerträgers 22 in einfacher Weise durch das Verbindungselement 36 der Kühlerverkleidung 16 verstärkt ist. Außerdem ist ein weiterer wesentlicher Vorteil, dass diese gesamte Befestigungseinrichtung 37 -bestehend aus dem Verbindungselement 36 auf Seiten des Befestigungsteils 26 und der Aufnahme 42 auf Seiten des Befestigungsteils 28- in einfacher Weise mittels lediglich eines Schraubelements 34 am Frontendträger 24 fixiert werden können.

## Patentansprüche

1. Befestigungsanordnung einer Kühlerverkleidung (16) und eines Stoßfängers (12) an einem Frontendträger (24) eines Kraftwagens, bei welcher die Kühlerverkleidung (16) und der Stoßfänger (12) jeweils wenigstens ein Befestigungsteil (26, 28) aufweisen, mittels welchem die Kühlerverkleidung (16) und der Stoßfänger (12) am Frontendträger (24) unter Vermittlung eines zugeordneten Schraubelements (34), befestigt ist,
**dadurch gekennzeichnet, dass**
am Befestigungsteil (26) der Kühlerverkleidung (16) ein Verbindungselement (36) vorgesehen ist, welches mit einer korrespondierenden Aufnahme (42) des Befestigungsteils (28) des Stoßfängers (12) zu einer gemeinsamen Befestigungseinrichtung verbunden ist, über welche die Kühlerverkleidung (16) und der Stoßfänger (12) mittels des Schraubelements (34), am Frontendträger (24) befestigt ist, wobei die gemeinsame Befestigungseinrichtung (37) aus dem Verbindungselement (36) der Kühlerverkleidung (16) und der Aufnahme (42) des Stoßfängers (12) besteht.

2. Befestigungsanordnung nach Anspruch 1,
**dadurch gekennzeichnet, dass**
das Verbindungselement (36) des Befestigungsteils (26) an der Kühlerverkleidung (16) angeformt ist.

3. Befestigungsanordnung nach Anspruch 1 oder 2,
**dadurch gekennzeichnet, dass**
das Verbindungselement (36) des Befestigungsteils (26) der Kühlerverkleidung (16) im Wesentlichen hülsenförmig und die Aufnahme (42) in dem Befestigungselement (28) des Stoßfängers (12) als Durchgangsöffnung (40) ausgebildet sind, welche eine formschlüssige Verbindung zwischen der Kühlerverkleidung (16) und dem Stoßfänger (12) bilden.

4. Befestigungsanordnung nach einem der Ansprüche 1 bis 3,
**dadurch gekennzeichnet, dass**
das hülsenförmige Verbindungselement (36) eine Durchgangöffnung (40) für das Schraubelement (34), aufweist, durch welche eine Führung (44) für das Befestigungselement (34) gebildet ist, entlang welcher die Kühlerverkleidung (16) und der Stoßfänger (12) zum Toleranzausgleich in Fahrzeuglängsrichtung relativ zum Frontendträger (24) einstellbar ist.

5. Befestigungsanordnung nach einem der Ansprüche 1 bis 4,
**dadurch gekennzeichnet, dass**
die gemeinsame Befestigungseinrichtung der Kühlerverkleidung (16) und des Stoßfängers (12) im Nahbereich einer Leuchteinheit (20) vorgesehen sind.

6. Kühlerverkleidung (16) einer Befestigungsanordnung nach den Ansprüchen 1 bis 4
**dadurch gekennzeichnet, dass**
das an der Kühlerverkleidung (16) zur Herstellung einer formschlüssigen Verbindung mit der Aufnahme (42) des Befestigungsteils (28) des Stoßfängers (12) angeformte Verbindungselement (36) im Wesentlichen hülsenförmig ausgebildet ist und eine Durchgangöffnung (40) für das Schraubelement (34) aufweist, durch welche eine Führung (44) für das Befestigungselement (34) zum Toleranzausgleich gebildet ist.

7. Stoßfänger (12) einer Befestigungsanordnung nach den Ansprüchen 1 bis 4
**dadurch gekennzeichnet, dass**
die zur Herstellung einer formschlüssigen Verbindung mit dem Verbindungselement (36) des Befestigungsteils (26) der Kühlerverkleidung (16) in dem Befestigungsteil (28) des Stoßfängers (12) vorgesehene Aufnahme (42) als Durchgangsöffnung ausgebildet ist.

## Claims

1. Fixing arrangement of a radiator shield (16) and a bumper (12) on a front end mount (24) of a motor vehicle, wherein the radiator shield (16) and the bumper (12) have at least one fixing part (26, 28) each, by means of which the radiator shield (16) and the bumper (12) are secured to the front end mount (24) by way of an assigned screw element (34),
**characterised in that**
on the fixing part (26) of the radiator shield (16), there is provided a connecting element (36), which, together with a corresponding receptacle (42) of the fixing part (28) of the bumper (12), is combined to form a common fastening device via which the radiator shield (16) and the bumper (12) are secured to the front end mount (24) by way of the screw element (34), the common fastening device (37) consisting of the connecting element (36) of the radiator shield (16) and the receptacle (42) of the bumper (12).

2. Fixing arrangement according to claim 1,
**characterised in that**
the connecting element (36) of the fixing part (26) is integrally formed on the radiator shield (16).

3. Fixing arrangement according to claim 1 or 2,
**characterised in that**
the connecting element (36) of the fixing part (26) of the radiator shield (16) is substantially sleeve-shaped and the receptacle (42) in the fixing element (28) of the bumper (12) is designed as a through-opening (40), the two features forming a positive connection between the radiator shield (16) and the bumper (12).

4. Fixing arrangement according to any of claims 1 to 3,
**characterised in that**
the sleeve-shaped connecting element (36) has a through-opening (40) for the screw element (34), whereby a guide (44) is formed for the fixing element (34), along which the radiator shield (16) and the bumper (12) can be adjusted relative to the front end mount (24) in the longitudinal direction of the vehicle for tolerance compensation.

5. Fixing arrangement according to any of claims 1 to 4,
**characterised in that**
the common fastening device for the radiator shield (16) and the bumper (12) is provided in the region close to a light unit (20).

6. Radiator shield (16) of a fixing arrangement according to any of claims 1 to 4,
**characterised in that**
the connecting element (36) integrally formed on the radiator shield (16) for establishing a positive connection to the receptacle (42) of the fixing part (28) of the bumper (12) is substantially sleeve-shaped and has a through-opening (40) for the screw element (34), whereby a guide (44) is formed for the fixing element (34) for tolerance compensation.

7. Bumper (12) of a fixing arrangement according to any of claims 1 to 4,
**characterised in that**
the receptacle (42) provided in the fixing part (28) of the bumper (12) for establishing a positive connection to the connecting element (36) of the fixing part (26) of the radiator shield (16) is designed as a through-opening.

## Revendications

1. Système de fixation de calandre de radiateur (16) et d'un pare-chocs (12) sur un support pour face avant (24) d'un véhicule automobile, la calandre de radiateur (16) et le pare-chocs (12) présentant chacun une partie de fixation (26, 28) au moyen de laquelle la calandre de radiateur (16) et le pare-chocs (12) sont fixés sur le support pour face avant (24) par l'intermédiaire d'un élément de vis (34) correspondant, **caractérisé en ce que** sur la partie de fixation (26) de la calandre de radiateur (16) est disposé un élément de liaison (36) qui est relié à un logement correspondant (42) de la partie de fixation (26) du pare-chocs (12) en un dispositif de fixation commun par l'intermédiaire duquel la calandre de radiateur (16) et le pare-chocs (12) au moyen de l'élément de vis (34) sont fixés sur le support pour face avant (24), le dispositif de fixation commun (37) étant constitué de l'élément de liaison (36) de la calandre de radiateur (16) et du logement (42) du pare-chocs (12).

2. Système de fixation selon la revendication 1, **caractérisé en ce que** l'élément de liaison (36) de la partie de fixation (26) est formé sur la calandre de radiateur (16).

3. Système de fixation selon la revendication 1 ou 2, **caractérisé en ce que** l'élément de liaison (36) de la partie de fixation (26) de la calandre de radiateur (16) sensiblement en forme de manchon et le logement (42) dans l'élément de fixation (28) du pare-chocs (12) sont conçus sous la forme d'ouverture traversante (40), qui forment une liaison par complémentarité de forme entre la calandre de radiateur (16) et le pare-chocs (12).

4. Système de fixation selon l'une quelconque des revendications 1 à 3, **caractérisé en ce que** l'élément de liaison (36) en forme de manchon présente une ouverture traversante (40) pour l'élément de vis (34), par laquelle un guide (44) est formé pour l'élément de fixation (34), le long duquel la calandre de radiateur (16) et le pare-chocs (12) peuvent être réglés pour compenser la tolérance dans la direction longitudinale du véhicule par rapport au support pour face avant (24).

5. Système de fixation selon l'une quelconque des revendications 1 à 4, **caractérisé en ce que** le dispositif de fixation commun de la calandre de radiateur (16) et du pare-chocs (12) est disposé à proximité d'une unité d'éclairage (20).

6. Calandre de radiateur (16) d'un système de fixation selon les revendications 1 à 4, **caractérisée en ce que** l'élément de liaison (36) formé sur la calandre de radiateur (16) pour fabriquer une liaison par complémentarité de forme avec le logement (42) de la partie de fixation (28) du pare-chocs (12) est conçu sensiblement sous la forme de manchon et présente une ouverture traversante (40) pour l'élément de vis (34) par laquelle un guide (44) est formé pour l'élément de fixation (34) servant à la compensation de tolérance.

7. Pare-chocs (12) d'un système de fixation selon les revendications 1 à 4, **caractérisé en ce que** le logement (42) prévu pour la fabrication d'une liaison par complémentarité de forme avec l'élément de liaison (36) de la partie de fixation (26) de la calandre de radiateur (16) dans la partie de fixation (28) du pare-chocs (12) est conçu sous la forme d'une ouverture traversante
